# EUROPÄISCHE PATENTANMELDUNG

(11) **EP 1 233 416 A2**
(43) Veröffentlichungstag der Anmeldung: **21.08.2002**
(21) Anmeldenummer: 02002663.9
(22) Anmeldetag: 06.02.2002
(51) Int. Cl.: G11B 23/03, G11B 23/00

(54) **Vorrichtung zur Reinigung eines Plattenlaufwerkes und Plattenlaufwerk**

(30) Priorität: 07.02.2001 DE 10105455
(71) Anmelder: ROBERT BOSCH GMBH, 70442 Stuttgart (DE)
(72) Erfinder: Attila, David, 31141 Hildesheim (DE)

(57) **Zusammenfassung**

Es werden ein Plattenlaufwerk (5) mit einem Rolleneinzug (10) für Speicherplatten und eine Vorrichtung (1) zur Reinigung des Plattenlaufwerkes (5) vorgeschlagen. Die Vorrichtung (1) ist plattenförmig ausgebildet, wobei die Abmessungen der Vorrichtung (1) so gewählt sind, dass sie nach Einschub in das Plattenlaufwerk (5) mindestens eine Einzugsrolle (15) des Rolleneinzugs (10) zumindest teilweise abdeckt. Die Vorrichtung ist zumindest in dem Bereich, der nach Einschub in das Plattenlaufwerk die mindestens eine Einzugsrolle abdeckt, mit einem Material (20) zur Aufnahme von Staub- und/oder Schmutzpartikeln der mindestens einen Einzugsrolle (15) beschichtet. Das Plattenlaufwerk (5) umfasst einen Reinigungsbetriebsmodus, in dem die mindestens eine Einzugsrolle (15) nach Beendigung des Einschubvorgangs der Vorrichtung (1) in gleicher Richtung weiter dreht.

## Beschreibung

### Stand der. Technik

Die Erfindung geht von einer Vorrichtung zur Reinigung eines Plattenlaufwerkes und von einem Plattenlaufwerk nach der Gattung der unabhängigen Ansprüche aus.

Bislang muß ein Plattenlaufwerk zu seiner Reinigung geöffnet und in seine Einzelteile zerlegt werden. Die Einzugsrollen eines Rolleneinzugs des Plattenlaufwerkes können dann, beispielsweise mit einem Pinsel oder durch Einlegen in ein Reinigungsbad, von Staub- und/oder Schmutzpartikeln befreit werden.

Plattenlaufwerke mit einem Rolleneinzug für Speicherplatten, der mindestens eine Einzugsrolle umfasst, sind bereits bekannt.

### Vorteile der Erfindung

Die erfindungsgemäße Vorrichtung zur Reinigung eines Plattenlaufwerkes und das Plattenlaufwerk mit den Merkmalen der unabhängigen Ansprüche haben demgegenüber den Vorteil, dass die Vorrichtung plattenförmig ausgebildet ist, wobei die Abmessungen der Vorrichtung so gewählt sind, dass sie nach Einschub in das Plattenlaufwerk mindestens eine Einzugsrolle des Rolleneinzugs zumindest teilweise abdeckt und dass die Vorrichtung zumindest in dem Bereich, der nach Einschub in das Plattenlaufwerk die mindestens eine Einzugsrolle abdeckt, mit einem Material zur Aufnahme von Staub- und/oder Schmutzpartikeln der mindestens einen Einzugsrolle beschichtet ist. Auf diese Weise läßt sich der Rolleneinzug des Plattenlaufwerkes einfach, schnell und mit wenig Aufwand reinigen. Eine Demontage des Plattenlaufwerkes zur Reinigung des Rolleneinzugs ist dann nicht mehr erforderlich. Durch die erfindungsgemäße Vorrichtung kann die Reinigung des Rolleneinzugs auch von einem Laien durchgeführt werden, wohingegen eine Demontage des Plattenlaufwerkes in der Regel von einem Fachmann durchgeführt werden muß.

Das erfindungsgemäße Plattenlaufwerk hat den Vorteil, dass ein Reinigungsbetriebsmodus vorgesehen ist, in dem sich die mindestens eine Einzugsrolle nach Beendigung des Einschubvorgangs einer erfindungsgemäßen Vorrichtung in gleicher Richtung weiter dreht. Auf diese Weise wird gewährleistet, dass die mindestens eine Einzugsrolle nach Einschub der Vorrichtung in das Plattenlaufwerk über das Material der Vorrichtung gleitet und die Staub- und/oder Schmutzpartikel an das Material abgeben kann.

Durch die in den Unteransprüchen aufgeführten Maßnahmen sind vorteilhafte Weiterbildungen und Verbesserungen der Vorrichtung und des Plattenlaufwerks gemäß den unabhängigen Ansprüchen möglich.

Die Reinigung des Rolleneinzugs kann noch gründlicher ausgeführt werden, wenn das Material mit einem Reinigungsmittel zur Lösung der Staub- und/oder Schmutzpartikel von der mindestens einen Einzugsrolle versehen ist.

Ein weiterer Vorteil ergibt sich dadurch, dass die Abmessungen der Vorrichtung in Einschubrichtung so gewählt sind, dass bei Beendigung des Einschubs durch Anschlag an einer inneren Gehäusewand des Plattenlaufwerkes die Vorrichtung über die mindestens eine Einzugsrolle hinausragt. Auf diese Weise wird sichergestellt, dass die Vorrichtung nach Einschub in das Plattenlaufwerk überhaupt einen Bereich aufweist, der die mindestens eine Einzugsrolle zumindest teilweise abdeckt, ohne dass dazu zusätzliche Arretierungsmittel erforderlich sind.

Vorteilhaft ist jedoch auch das Vorsehen von Arretiermitteln an der Vorrichtung, die den Einzug der Vorrichtung in das Plattenlaufwerk stoppen. Auch auf diese Weise kann gewährleistet werden, dass die Vorrichtung nach Einschub in das Plattenlaufwerk einen Bereich aufweist, der die mindestens eine Einzugsrolle zumindest teilweise abdeckt. Durch Verwendung der Arretiermittel ist es dabei nicht erforderlich, dass die Vorrichtung durch Anschlag an einer inneren Gehäusewand des Plattenlaufwerkes in ihrer Bewegung gestoppt wird, so dass die Ausdehnung der Vorrichtung im Inneren des Plattenlaufwerkes reduziert werden kann, vor allem, wenn die mindestens eine Einzugsrolle in der Nähe der Einschuböffnung im Inneren des Gehäuses des Plattenlaufwerkes und somit von der inneren Gehäusewand entfernt angeordnet ist. Somit lassen sich Materialkosten für die Vorrichtung einsparen.

Vorteilhaft ist auch, dass nach Einschub der Vorrichtung in das Plattenlaufwerk die mindestens eine Einzugsrolle durch das Material in der Breite einer durch das Plattenlaufwerk abspielbaren Speicherplatte abgedeckt ist. Auf diese Weise kann eine Reinigung des Rolleneinzugs vor allem in dem Bereich der mindestens einen Einzugsrolle erfolgen, der zum Einzug von abzuspielenden Speicherplatten in das Plattenlaufwerk benötigt wird. Wenn die mindestens eine Einzugsrolle in diesem Bereich von Staub- und/oder Schmutzpartikeln gereinigt wird, kann ein Beschädigen einer abzuspielenden Speicherplatte durch Staub- und/oder Schmutzpartikel bei Einschub in das Plattenlaufwerk, bzw. beim Ausschub aus dem Plattenlaufwerk, verhindert werden.

Vorteilhaft ist außerdem ein Plattenlaufwerk, bei dem eine Sensorik zur Detektion des Einschubs der Vorrichtung vorgesehen ist und die bei Detektion des Einschubs der Vorrichtung eine Einschaltung des Reinigungsbetriebsmodus veranlaßt. Auf diese Weise ist zur Einstellung des Reinigungsbetriebsmodus keine Benutzerinteraktion erforderlich, so dass der Bedienkomfort für den Benutzer erhöht wird.

### Zeichnung

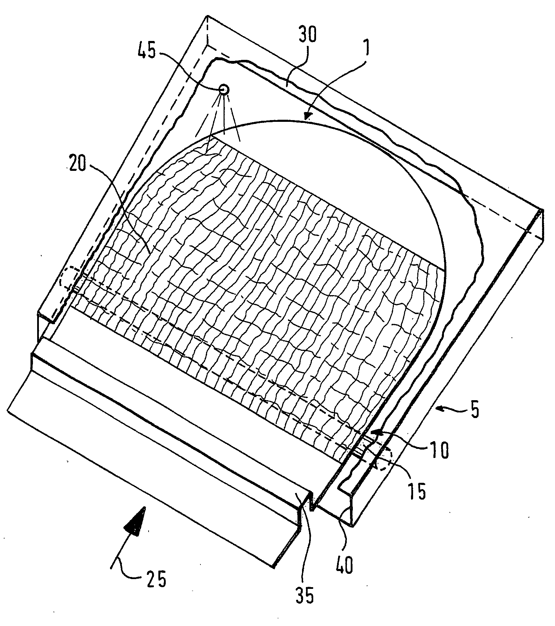

Ein Ausführungsbeispiel der Erfindung ist in der Zeichnung dargestellt und in der nachfolgenden Beschreibung näher erläutert. Es zeigt die einzige Figur eine in ein Plattenlaufwerk eingeführte erfindungsgemäße Vorrichtung.

### Beschreibung des Ausführungsbeispiels

In der Figur kennzeichnet 5 einen Ausschnitt eines Plattenlaufwerkes zum Abspielen und/oder Aufzeichnen von Speicherplatten. Bei einem solchen Plattenlaufwerk kann es sich beispielsweise um einen Compact-Disc-Spieler, einen DVD-Spieler (digital versatile disc) oder um einen Mini-Disc-Spieler handeln. Entsprechend kann es sich bei den Speicherplatten um Compact-Discs, um DVDs oder um Mini-Discs handeln. Das Plattenlaufwerk 5 umfasst einen Rolleneinzug 10, der wiederum mindestens eine Einzugsrolle 15 umfasst. An einer äußeren Gehäusewand 40 des Plattenlaufwerkes 5 ist ein in der Figur nicht dargestellter Eingabeschacht angeordnet, über den eine Speicherplatte in das Plattenlaufwerk 5 eingeführt werden kann. Dabei wird die Speicherplatte von der Einzugsrolle 15 aufgenommen und durch Drehen der Einzugsrolle 15 um deren Längsachse ins Innere des Plattenlaufwerkes 5 eingezogen. Der Einzug erfolgt dabei über den Kontakt zwischen der Einzugsrolle 15 und der entsprechenden Speicherplatte. Dabei kann auf der der Einzugsrolle 15 abgewandten Seite der Speicherplatte und direkt gegenüber der Einzugsrolle 15 oder versetzt zu dieser eine weitere Einzugsrolle vorgesehen sein, um den Einzug der Speicherplatte ins Innere des Plattenlaufwerkes 5 zu erleichtern. Andernfalls liegt die Speicherplatte auf ihrer der Einzugsrolle 15 abgewandten Seite auf einer Auflagefläche des Plattenlaufwerkes 15 auf und wird nur von der Einzugsrolle 15 erfasst und ins Innere des Plattenlaufwerkes 5 transportiert. Die im weiteren beispielhaft betrachtete Einzugsrolle 15 des Plattenlaufwerkes 5 kann beispielsweise aus einem elastischen Material, wie z.B. Gummi, ausgebildet sein, um die nötige Haftreibung beim Transport der Speicherplatte in das bzw. aus dem Plattenlaufwerk 5 aufzubringen.

Mit der Zeit gelangen über den Eingabeschacht des Plattenlaufwerkes 5 Staub- und/oder Schmutzpartikel auf die Oberfläche der Einzugsrolle 15. Diese Staub- und/oder Schmutzpartikel können beim Einschub einer Speicherplatte in das bzw. bei deren Ausschub aus dem Plattenlaufwerk 5 mittels der Einzugsrolle 15 zu Kratzern auf der Speicherplatte führen und damit Fehler beim Abspielen der Speicherplatte verursachen. Ein derartiges Verschmutzen der Einzugsrolle 15 kann auch dazu führen, dass die Haftreibung zwischen der Einzugsrolle 15 und der einzuschiebenden oder auszuschiebenden Speicherplatte verringert wird, so dass die Einschubkraft bzw. die Ausschubkraft verringert wird und im Extremfall kein Einschub bzw. kein Ausschub mehr möglich ist.

In der Figur ist nun eine plattenförmige Vorrichtung 1 dargestellt, die im folgenden als Reinigungsplatte bezeichnet werden soll. Die Abmessungen der Reinigungsplatte 1 sind dabei so gewählt, dass sie, wie in der Figur dargestellt, nach Einschub in das Plattenlaufwerk 5 die Einzugsrolle 15 zumindest teilweise abdeckt. In dem Bereich, in dem diese Abdeckung erfolgt, ist die Reinigungsplatte 1 mit einem Material 20 zur Aufnahme von Staub- und/oder Schmutzpartikeln, die sich auf der Einzugsrolle 15 befinden, beschichtet. Das Material 20 ist dabei so gewählt, dass bei in das Plattenlaufwerk 5 eingeführter Reinigungsplatte 1 die Haftreibung zwischen der Einzugsrolle 15 und dem Material 20 überwunden werden kann, so dass die Einzugsrolle 15 durch Drehung um ihre Längsachse auf dem Material 20 gleitet. Durch diesen Vorgang werden auf der Einzugsrolle 15 befindliche Staub- und/oder Schmutzpartikel vom Material 20 aufgenommen und die Einzugsrolle 15 somit gereinigt. Der Reinigungseffekt kann noch verbessert werden, wenn das Material 20 mit einem Reinigungsmittel, beispielsweise Spiritus oder Heptan, zur Lösung der Staub- und/oder Schmutzpartikel von der Einzugsrolle 15 versehen ist. Dann werden auch solche Staub- und/oder Schmutzpartikel von der Einzugsrolle 15 gelöst und durch das Material 20 aufgenommen, die etwas stärker an der Einzugsrolle 15 haften und durch die reine Gleitbewegung der Einzugsrolle 15 auf dem Material 20 nicht abgelöst werden können.

Die Reinigungsplatte 1 wird zunächst in gleicher Weise wie eine Speicherplatte in das Plattenlaufwerk 5 mittels der Einzugsrolle 15 eingeführt und nach Ende des Einschubvorgangs läßt sich die Reinigungsplatte 1 durch die Einzugsrolle 15 nicht weiter in das Plattenlaufwerk 5 einführen, so dass dann die Haftreibung zwischen der Einzugsrolle 15 und der Reinigungsplatte 1 bzw. dem Material 20 bei Weiterdrehen der starr im Plattenlaufwerk 5 gelagerten Einzugsrolle 15 um ihre Längsachse in Gleitreibung übergeht.

Der Einschub der Reinigungsplatte 1 in das Plattenlaufwerk 5 kann auf verschiedene Weise gestoppt und damit beendet werden. Zum einen kann dies durch Anschlag der Reinigungsplatte 1 an einer der Einschuböffnung im Inneren des Gehäuses des Plattenlaufwerkes 5 gegenüberliegenden inneren Gehäusewand 30 erfolgen. Die Ausdehnung der Reinigungsplatte 1 in Einschubrichtung 25 muß dann so bemessen sein, dass die Reinigungsplatte 1 im eingeschobenen Zustand, also bei Anschlag an die innere Gehäusewand 30, noch über die Einzugsrolle 15 hinausragt. Dabei muß das Material 20 in einem Bereich der Reinigungsplatte 1 angeordnet sein, in dem es nach Anschlag der Reinigungsplatte 1 an die innere Gehäusewand 30 die Einzugsrolle 15 noch abdeckt. Zusätzlich oder alternativ kann die Reinigungsplatte 1, wie in der Figur dargestellt, Arretiermittel 35 umfassen, die den Einzug der Reinigungsplatte 1 in das Plattenlaufwerk 5 stoppen. Diese Arretiermittel 35 sind im Ausführungsbeispiel nach der Figur als Blockierkante ausgebildet, die beim Einzug der Reinigungsplatte 1 in das Plattenlaufwerk 5 an der äußeren Gehäusewand 40 des Plattenlaufwerkes 5 beispielsweise oberhalb der Einschuböffnung anschlägt und damit ebenfalls den Einschubvorgang beendet und die Reinigungsplatte 1 stoppt. Auch in diesem Fall muß das Material 20 in einem Bereich der Reinigungsplatte 1 angeordnet sein, der nach Arretierung der Reinigungsplatte 1 im Plattenlaufwerk 5 die Einzugsrolle 15 abdeckt. Eine möglichst großflächige Beschichtung der Reinigungsplatte 1 mit dem Material 20 ist insofern von Vorteil, als damit einerseits verschiedene Positionen der Einzugsrolle 15 in unterschiedlichen Typen von Plattenlaufwerken und andererseits auch die Möglichkeit der Abdeckung mehrerer Einzugsrollen erfasst wird. Bei Vorhandensein nur einer Einzugsrolle muß die Reinigungsplatte 1 nur auf ihrer dieser Einzugsrolle zugewandten Seite mit dem Material 20 beschichtet sein. Dies gilt auch dann, wenn mehrere Einzugsrollen auf der selben Seite der Reinigungsplatte 1 angeordnet sind. Wenn auf verschiedenen Seiten der Reinigungsplatte 1 jeweils mindestens eine Einzugsrolle angeordnet ist, so ist die Reinigungsplatte 1 entsprechend beidseitig mit dem Material 20 zu beschichten.

Um einen möglichst großen Bereich der Einzugsrolle 15 zu reinigen, sollte die Reinigungsplatte 1, wie in der Figur dargestellt, an der Stelle, an der sie nach Einschub in das Plattenlaufwerk 5 mit dem Material 20 die Einzugsrolle 15 abdeckt, möglichst breit ausgeführt sein. Um die Einzugsrolle 15 an den Stellen zu reinigen, an denen sie mit einer einzuschiebenden oder auszuschiebenden Speieherplatte in Berührung kommt, sollte diese Breite dem Durchmesser einer solchen Speicherplatte mindestens entsprechen. Wenn das Plattenlaufwerk 5 beim Einführen einer Speicherplatte zusätzlich ein seitliches Spiel aufweist, sollte die Reinigungsplatte 1 möglichst breiter sein als der Durchmesser einer solchen Speicherplatte, um die Einzugsrolle 15 an möglichst allen Stellen reinigen zu können, die mit einer einzuführenden oder auszuschiebenden Speicherplatte in Berührung kommen könnten. Natürlich sollte dann auch das Material 20 in dem Bereich der Reinigungsplatte 1, der nach Ende des Einschubvorgangs der Reinigungsplatte 1 in das Plattenlaufwerk 5 die Einzugsrolle 15 abdeckt, in dieser Breite auf die Reinigungsplatte 1 aufgebracht sein. Die Reinigungsplatte 1 kann dann an ihrer der inneren Gehäusewand 30 zugewandten Seite etwa die Form einer mit dem Plattenlaufwerk 5 abspielbaren Speicherplatte annehmen, um Material zu sparen, wie dies auch in der Figur dargestellt ist.

Das Material 20 kann beispielsweise aus Vliesstoff, Filz oder sonst einem zur Reinigung der Einzugsrolle 15 geeigneten Stoff gebildet sein.

Die Reinigungsplatte 1 kann auch dann beidseitig mit dem Material 20 beschichtet sein, wenn nur eine einzige Einzugsrolle, die gemäß der einzigen Figur mit dem Bezugszeichen 15 gekennzeichnet ist, im Plattenlaufwerk 5 vorgesehen ist. Das Material 20 kann dann Staub- und/oder Schmutzpartikel auf der der Einzugsrolle 15 gegenüberliegenden Auflagefläche des Plattenlaufwerkes 5 bereits beim Einschieben der Reinigungsplatte 1 in das Plattenlaufwerk 5, bzw. spätestens beim Ausschieben der Reinigungsplatte 1 aus dem Plattenlaufwerk 5, aufnehmen. Zu diesem Zweck sollte das Material 20 auf der der Auflagefläche des Plattenlaufwerkes 5 zugewandten Seite der Reinigungsplatte 1 möglichst großflächig aufgebracht sein, um eine optimale Reinigungswirkung zu erzielen. Natürlich kann das Material 20 auf beiden Seiten der Reinigungsplatte 1 mit dem Reinigungsmittel versehen sein.

Um ein Weiterdrehen der Einzugsrolle 15 nach Beendigung des Einschubvorgangs der Reinigungsplatte 1 in das Plattenlaufwerk 5 zu gewährleisten, kann ein vom Benutzer an einer in der Figur nicht dargestellten Eingabeeinheit einstellbarer Reinigungsbetriebsmodus eingestellt werden, der das Drehen der Einzugsrolle 15 für eine vorgegebene Zeit nach Beendigung des Einschubvorgangs der Reinigunglsplatte 1 oder bis zu einer Benutzerinteraktion an der Eingabeeinheit fortsetzt. Die Zeitvorgabe kann im Plattenlaufwerk 5 fest eingestellt oder vom Benutzer an der Eingabeeinheit programmierbar sein. Es kann zusätzlich oder alternativ eine Sensorik 45 zur Detektion des Einschubs der Reinigungsplatte 1 im Plattenlaufwerk 5 vorgesehen sein, die das Plattenlaufwerk automatisch und damit für den Benutzer besonders komfortabel in den Reinigungsbetriebsmodus umschaltet, wenn sie den Einschub der Reinigungsplatte 1 in das Plattenlaufwerk 5 detektiert. Die Sensorik 45 kann dabei beispielsweise optisch ausgebildet sein und beispielsweise mittels Laserabtastung die von herkömmlichen Speicherplatten unterschiedliche Form der Reinigungsplatte 1 oder das bei herkömmlichen Speicherplatten nicht verwendete Material 20 detektieren.

Für den Fall der Verwendung der Arretiermittel 35 zur Beendigung des Einschubvorgangs der Reinigungsplatte 1 dreht sich die Einzugsrolle 15 nach Beendigung des Einschubvorgangs noch so lange in gleicher Richtung weiter, bis ein Ausschubbefehl an der Eingabeeinheit eingegeben und die Reinigungsplatte durch Drehen der Einzugsrolle 15 in umgekehrter Richtung wieder ausgeschoben wird. Dies gilt allerdings nur, wenn die Reinigungsplatte 1 nicht vollständig - wie eine normale Speicherplatte - eingezogen wird und dem Plattenlaufwerk 5 eine Beendigung des Einzugs nicht signalisiert wird. In diesem Fall ist ein eigener Reinigungsbetriebsmodus des Plattenlaufwerks 5 nicht erforderlich.

## Patentansprüche

1. Vorrichtung (1) zur Reinigung eines Plattenlaufwerkes (5) mit einem Rolleneinzug (10) für Speicherplatten, **dadurch gekennzeichnet, dass** die Vorrichtung (1) plattenförmig ausgebildet ist, wobei die Abmessungen der Vorrichtung (1) so gewählt sind, dass sie nach Einschub in das Plattenlaufwerk (5) mindestens eine Einzugsrolle (15) des Rolleneinzugs (10) zumindest teilweise abdeckt und dass die Vorrichtung (1) zumindest in dem Bereich, der nach Einschub in das Plattenlaufwerk (5) die mindestens eine Einzugsrolle (15) abdeckt, mit einem Material (20) zur Aufnahme von Staub- und/oder Schmutzpartikeln der mindestens einen Einzugsrolle (15) beschichtet ist.

2. Vorrichtung (1) nach Anspruch 1, **dadurch gekennzeichnet, dass** das Material (20) mit einem Reinigungsmittel zur Lösung der Staub- und/oder Schmutzpartikel von der mindestens einen Einzugsrolle (15) versehen ist.

3. Vorrichtung (1) nach Anspruch 1 oder 2, **dadurch gekennzeichnet, dass** die Abmessungen der Vorrichtung (1) in Einschubrichtung (25) so gewählt sind, dass bei Beendigung des Einschubs durch Anschlag an einer inneren Gehäusewand (30) des Plattenlaufwerkes (5) die Vorrichtung (1) über die mindestens eine Einzugsrolle (15) hinausragt.

4. Vorrichtung (1) nach Anspruch 1, 2 oder 3, **dadurch gekennzeichnet, dass** die Vorrichtung (1) Arretiermittel (35) umfasst, die den Einzug der Vorrichtung (1) in das Plattenlaufwerk (5) stoppen.

5. Vorrichtung (1) nach Anspruch 4, **dadurch gekennzeichnet, dass** die Arretiermittel (35) als Blockierkante ausgebildet sind, die beim Einzug der Vorrichtung (1) in das Plattenlaufwerk (5) an einer äußeren Gehäusewand (40) des Plattenlaufwerkes (5) anschlägt.

6. Vorrichtung (1) nach einem der vorherigen Ansprüche, **dadurch gekennzeichnet, dass** nach Einschub der Vorrichtung (1) in das Plattenlaufwerk (5) die mindestens eine Einzugsrolle (15) durch das Material (20) in der Breite einer durch das Plattenlaufwerk (5) abspielbaren Speicherplatte abgedeckt ist.

7. Vorrichtung (1) nach einem der vorherigen Ansprüche, **dadurch gekennzeichnet, dass** das Material (20) aus Vliesstoff gebildet ist.

8. Plattenlaufwerk (5) mit einem Rolleneinzug (10) für Speicherplatten, der mindestens eine Einzugsrolle (15) umfasst, **dadurch gekennzeichnet, dass** ein Reinigungsbetriebsmodus vorgesehen ist, in dem sich die mindestens eine Einzugsrolle (15) nach Beendigung des Einschubvorgangs einer Vorrichtung (1) nach einem der vorherigen Ansprüche in gleicher Richtung weiter dreht.

9. Plattenlaufwerk (5) nach Anspruch 8, **dadurch gekennzeichnet, dass** eine Sensorik (45) zur Detektion des Einschubs der Vorrichtung (1) vorgesehen ist und bei Detektion des Einschubs der Vorrichtung (1) eine Einschaltung des Reinigungsbetriebsmodus veranlaßt.

10. Plattenlaufwerk (5) nach Anspruch 8 oder 9, **dadurch gekennzeichnet, dass** eine Eingabeeinheit vorgesehen ist, an der der Reinigungsbetriebsmodus einstellbar ist.
